Europäisches Patentamt

European Patent Office

Office européen des brevets

(11) Publication number: **0 294 692 B1**

# EUROPEAN PATENT SPECIFICATION

(45) Date of publication of patent specification: **14.12.94**

(51) Int. Cl.⁵: **A23D 7/02, A23D 7/00, A23D 9/02, A23D 9/00**

(21) Application number: **88108712.6**

(22) Date of filing: **31.05.88**

The file contains technical information submitted after the application was filed and not included in this specification

(54) **Powdered fat and premix comprising the same.**

(30) Priority: **12.06.87 JP 146790/87**
**04.09.87 JP 221619/87**

(43) Date of publication of application:
**14.12.88 Bulletin 88/50**

(45) Publication of the grant of the patent:
**14.12.94 Bulletin 94/50**

(84) Designated Contracting States:
**AT BE CH DE ES FR GB GR IT LI LU NL SE**

(56) References cited:
**EP-A- 0 251 020**
**DD-A- 217 976**
**US-A- 4 477 472**
**US-A- 4 492 714**

(73) Proprietor: **ASAHI DENKA KOGYO KABUSHIKI KAISHA**
**2-35, Higashiogu 7-chome**
**Arakawa-ku Tokyo 116 (JP)**

(72) Inventor: **Okutomi, Yasuo**
**Asahi Denka Kogyo K.K.**
**2-35, 7-chome, Higashiogu**
**Arakawa-ku Tokyo (JP)**
Inventor: **Edo, Hiroshi**
**Asahi Denka Kogyo K.K.**
**2-35, 7-chome, Higashiogu**
**Arakawa-ku Tokyo (JP)**
Inventor: **Kawaide, Satoshi**
**Asahi Denka Kogyo K.K.**
**2-35, 7-chome, Higashiogu**
**Arakawa-ku Tokyo (JP)**

(74) Representative: **Patentanwälte Grünecker,**
**Kinkeldey, Stockmair & Partner**
**Maximilianstrasse 58**
**D-80538 München (DE)**

**Description**

This invention relates to powdered fats and premixes comprising the same as well as to their use for confectionery, baking and noodle-making.

Diacetyltartrate monoglyceride (DATEM), which is effective in, for example, preventing aging and enriching gluten, is incorporated into modifiers such as softeners or dough conditioners for use in confectionery, baking and noodle making. A conventional modifier is in the form of a powder obtained by mixing, for example, wheat flour, various starches, sugars such as sucrose, glucose or dextrose, milk powder or soybean powder with emulsifier(s) such as diacetyltartrate monoglyceride and is substantially free from water. Such a modifier may be generally used in an amount of 1 to 10 parts by weight per 100 parts by weight of the employed wheat flour, depending on the total amount of the emulsifier(s) including diacetyltartrate monoglyceride.

In a conventional modifier comprising diacetyltartrate monoglyceride, emulsifier(s) are dispersed in the form of a powder. Diacetyltartrate monoglyceride, having a melting point lower by about 10°C than those of other emulsifiers such as monoglyceride, succinic monoglyceride or calcium stearyl lactylate, is liable to form undispersed lumps at a high temperature and a high humidity. Thus it is difficult to homogeneously disperse a modifier comprising the same, which results in scattering in the qualities of the products.

On the other hand, the rationalization of production has been more and more required in the field of confectionery, baking and noodle making, with the recent mechanization, reduction of labor and various demands of consumers. Therefore it is a recent trend in these fields not to prepare a dough by starting with weighing and mixing of various starting materials but to use a premix which would give final products of uniform qualities without requiring any skill.

A conventional premix is obtained by adding one or more materials selected from among fats, sugars, powder milk, egg powder, inflating agents, common salt, seasonings and spices to wheat flour. Some premixes further contain emulsifier(s), oxidizing agent(s), reducing agent(s), yeast, yeast food and various enzymes.

Among various emulsifiers employed in baking, diacetyltartrate monoglyceride (DATEM) has been commonly used because of its excellent baking properties as described above. However the use of the diacetyltartrate monoglyceride is limited either to the direct addition thereof as such as an emulsifier during the production of bread or the application thereof in the form of a modifier containing the same together with, for example, oxidizing agent(s), reducing agent(s), enzyme(s), sugar(s), wheat flour, gluten and starches.

When DATEM is added to a premix in the above manner, however, it would be hydrolyzed by the moisture contained in the wheat flour (approximately 14 %), which might deteriorate the baking properties of the same, though slowly. Therefore DATEM is not used in practice in a premix, which has a relatively high moisture content and which is to be stored for a prolonged period prior to the use, in spite of the excellent baking properties of the same.

From US-A-4 492 714 a powdered fat prepared by powdering an O/W emulsion comprising fat, water, diacetyltartrate monoglyceride and salt(s) is known. This powdered fat is used to confer acid stability, heat stability, creaminess, etc to, for instance, creamed soft drinks, soups and gravies, gelatin desserts, salad dressings and coffee whiteners.

EP-A-0 251 020 relates to an emulsion composition for use in confectionery, bread and noodle making containing fat, water, acetylated tartaric acid esters of monoglycerides and base and/or salt with a pH value of 2.0 to 12.0.

It is the object of the present invention to provide a modifier which forms no undispersed lumps and which gives products of uniform qualities when used in baking and to provide a premix for confectionery, baking and noodle making, which is neither accompanied by hydrolysis of diacetyltartrate monoglyceride with the lapse of time nor by the deterioration in the performance of confectionery, baking and noodle making.

Accordingly the present invention is directed to the use of a powdered fat prepared by powdering an oil-in-water type emulsion fat, (O/W emulsion fat), comprising fat(s), water, diacetyltartrate monoglyceride and base(s) only or base(s) and salt(s) and having a pH value of 2.0 to 12.0 for confectionary, baking and noodle-making with the proviso that the salt(s) is (are) not formed from a strong acid or a strong base and to the use of a premix comprising a powdered fat which is prepared by powdering an O/W emulsion fat comprising fat(s), water, diacetyltartrate monoglyceride and base(s) only or base(s) and salt(s) and having a pH value of 2.0 to 12.0 for confectionary, baking and noodle-making with the proviso that the salt(s) is (are) not formed from a strong acid or a strong base.

EP 0 294 692 B1

The present invention further provides a powdered fat prepared by powdering an O/W emulsion comprising fat(s), water and salt(s) of diacetyltartrate monoglyceride and having a pH value of 2.0 to 12.0 and a premix comprising a powdered fat which is prepared by powdering an O/W emulsion fat comprising fat(s), water and salt(s) of diacetyltartrate monoglyceride and having a pH value of 2.0 to 12.0.

Now the present invention will be described in detail.

The diacetyltartrate monoglyceride to be used in the present invention may be prepared by any method without restriction. It may be usually obtained by reacting diacetyltartaric anhydride with a mixture of monoglyceride and diglyceride in the presence of acetic acid or by esterifying a mixture of monoglyceride and diglyceride with tartaric acid and acetic acid in the presence of acetic anhydride. Thus the diacetyltartrate monoglyceride to be used in the present invention usually contains also diacetyltartrate diglyceride.

The amount of the diacetyltartrate monoglyceride in the powdered fat is determined based on the amounts of the diacetyltartrate monoglyceride and the powdered fat(s) to be finally added to wheat flour. It is generally preferable to add 0.1 to 1 % by weight of the diacetyltartrate monoglyceride to the wheat flour for confectionery, baking and noodle making. Thus the powdered fat comprises 1 to 80 % by weight of the diacetyltartrate monoglyceride.

As the base(s) to be used in the present invention, one or more members selected from among, for example, ammonia, calcium hydroxide, calcium oxide, magnesium hydroxide, magnesium oxide, potassium hydroxide and sodium hydroxide may be employed.

As the salt(s) to be used in the present invention, one or more members selected from among, for example, sodium, calcium, magnesium, potassium, ammonium and choline salts of inorganic and/or organic acids may be employed.

Examples of the inorganic acid for preparing the abovementioned salts are carbonic, hydrochloric, phosphoric, polyphosphoric and sulfuric acids, while examples of the organic acids as mentioned above are acetic, citric, gluconic, lactic, malic, tartaric, succinic, cytidylic, adipic, fumaric, ascorbic, isoascorbic, alginic, cellulose glycolic, phosphatidic, glycerophosphoric, pantothenic, starch glycolic, starch phosphoric, polyacrylic, glutamic, guanylic, inosinic, ribonucleic, aspartic and uridylic acids.

Salts formed from a strong acid and a strong base, such as common salt, i.e., sodium chloride, or sodium sulfate, are not included in the salts available in the present invention, since these salts have no effect of adjusting pH values.

Preferable examples of the salts to be used in the present invention include calcium acetate, magnesium acetate, potassium acetate, sodium acetate, ammonium adipate, calcium adipate, potassium adipate, ammonium carbonate, calcium carbonate, magnesium carbonate, potassium carbonate, sodium carbonate, calcium hydrogen carbonate, magnesium hydrogen carbonate, potassium hydrogen carbonate, sodium hydrogen carbonate, ammonium hydrogen carbonate, monoammonium phosphate, dipotassium phosphate, disodium phosphate, diammonium phosphate, tricalcium phosphate, tripotassium phosphate, trisodium phosphate, triammonium phosphate, potassium pyrophosphate, sodium pyrophosphate, potassium polyphosphate, sodium polyphosphate, potassium metaphosphate, sodium metaphosphate, acid sodium pyrophosphate, acid calcium pyrophosphate, potassium hydrogen tartrate, ammonium citrate, calcium citrate, potassium citrate, sodium citrate, calcium gluconate, potassium gluconate, sodium gluconate, ammonium lactate, calcium lactate, potassium lactate, sodium lactate, calcium dℓ-malate, potassium dℓ-malate, sodium dℓ-malate, triammonium citrate, sodium dihydrogen citrate, potassium dihydrogen citrate, potassium tartrate, sodium tartrate, potassium sodium tartrate, monosodium succinate, disodium succinate, ammonium glutamate, calcium glutamate, potassium glutamate, sodium glutamate, magnesium glutamate, calcium guanylate, sodium guanylate, calcium inosinate, sodium inosinate, ribonucleotide calcium, ribonucleotide sodium, sodium aspartate, sodium uridylate, potassium ascorbate, sodium ascorbate, calcium ascorbate, sodium isoascorbate, ammonium alginate, calcium alginate, potassium alginate, sodium alginate, calcium pantothenate and sodium pantothenate. It is particularly preferable to use one or more salts selected from among sodium acetate, ammonium carbonate, calcium carbonate, magnesium carbonate, sodium carbonate, sodium hydrogen carbonate, ammonium hydrogen carbonate, dipotassium phosphate, disodium phosphate, trisodium phosphate, potassium pyrophosphate, sodium pyrophosphate, sodium citrate, sodium tartrate, disodium succinate, sodium glutamate and sodium ascorbate.

The amount of these base(s) only or base(s) and salt(s) to be added to the O/W emulsion fat varies depending on the acid value and amount of the employed diacetyltartrate monoglyceride, and the alkalinity of the employed base(s) or salt(s) and base(s). Namely, they should be added at a ratio to achieve the pH value of the O/W emulsion fat of 2.0 to 12.0.

The pH value of the O/W emulsion fat, which comprises fat(s), water and diacetyltartrate monoglyceride and not contains any base or salt ranges from approximately 1.3 to approximately 1.9.

3

When the pH value of the O/W emulsion fat is less than 2.0 or exceeds 12.0, no excellent emulsification can be achieved. As a result, the powdered fat thus obtained is unsatisfactory. Thus the stability of the O/W emulsion fat can be considerably improved by adjusting the pH value of the same within a range of 2.0 to 12.0, still preferably 3.0 to 9.5.

As the fat(s) to be used in the present invention, one or more members selected from among, for example, natural fats such as palm oil, palm kernel oil, coconut oil, soybean oil, rapeseed oil, rice oil, sunflower oil, sufflower oil, beef tallow, milk fat, lard, cacao fat, fish oil and whale oil optionally hydrogenated, fractionated and/or transesterified may be employed.

Various additives may be added to the powdered fat during the preparation thereof. Examples of these additives include emulsifiers such as mono- and diglycerides, sucrose fatty acid esters, sorbitan fatty acid esters, propylene glycol fatty acid esters, lecithin, polyoxyethylene fatty acid esters, polyoxyethylene sorbitan fatty acid esters, polyglycerol fatty acid esters, glycerol or polyglycerol polymerized fatty acid esters, acetic monoglyceride, lactic monoglyceride, citric monoglyceride, succinic monoglyceride, ethoxymonoglyceride, calcium stearyllactate and sodium stearyllactate; antioxidants; colorants: perfumes; and excipients including sugars such as glucose, dextrin, fructose, isomerized sugars, inverted sugars, sucrose, maltose and lactose, gums such as gum arabic, gelatin, xanthan gum, guar gum, locust bean gum and pectin, starches and proteins such as whole milk powder, skim milk, whey, butter milk powder, casein, acid casein, sodium caseinate, whole milk, defatted milk, butter milk and lactoalbumin isolated from whey.

The powdered fat to be used in the present invention may be used together with, for example, starches such as wheat flour and glutens; sugars such as sucrose, glucose and dextrose, milk powder, soybean powder, emulsifiers, redox agents such as potassium bromate, L-ascorbic acid, sodium L-ascorbate, cysteine, glutathione and cystine, yeast food, sizing agent, and enzyme preparations such as $\alpha$-amylase, protease, lipoxydase, lactase, invertase, pentonase, malt, glucose oxidase and glucoamylase. In such a case, it is preferable that the amount of the powdered fat ranges from 10 to 100 %.

The process for preparing the powdered fat to be used in the present invention is not particularly restricted. For example, it may be obtained by the following method.

5 to 95 % by weight of an oleaginous phase prepared by dissolving the diacetyltartrate monoglyceride optionally together with oil-soluble material(s) in fat(s) and 95 to 5 % by weight of an aqueous phase prepared by dissolving base(s) only or base(s) and salt(s) optionally together with water-soluble material(s) in water are preliminarily emulsified. Then the obtained O/W emulsion fat is powdered by, for example, spray drying, foam mat drying or lyophilizing to thereby give the powdered fat to be used in the present invention. In the present invention, the emulsion fat is of O/W type, since those of another type can be hardly powdered.

The powdered fat of the present invention comprises salt(s) of diacetyltartrate monoglyceride instead of the diacetyltartrate monoglyceride itself as described above. In this case, the powdered fat usually contains neither the base(s) nor the salt(s) mentioned above.

As the salt(s) of the diacetyltartrate monoglyceride described above, those obtained by converting said diacetyltartrate monoglyceride into a salt with the base(s) only or base(s) and salt(s) described above are employed. For example, it is preferable to use one or more salts selected from among, for example, alkali metal salts and alkaline earth metal salts such as sodium salts, potassium salts, calcium salts and magnesium salts.

The amount of the diacetyltartrate monoglyceride salt(s) in the powdered fat is determined depending on the amounts of the powdered fat and diacetyltartrate monoglyceride salt(s) to be finally added to wheat flour. It is generally preferable to add 0.1 to 1 % by weight of diacetyltartrate monoglyceride salt(s) to the wheat flour for confectionery, baking and noodle making to which the powdered fat is to be added. Thus the powdered fat may comprises 1 to 80 % by weight of the diacetyltartrate monoglyceride salt(s).

Alternatively, the diacetyltartrate monoglyceride may be used together with salt(s) thereof. In such a case, it is preferable that the total amount of the diacetyltartrate monoglyceride and its salt(s) ranges from 0.1 to 1 % by weight based on the wheat flour. Namely, the powdered fat comprises 1 to 80 % by weight of the diacetyltartrate monoglyceride and its salt(s).

It is unnecessary to further add any base and/or salt to the powdered fat of the present invention comprising the salt(s) of diacetyltartrate monoglyceride, unlike the case of the former powdered fat for use in the present invention as described above. However the abovementioned diacetyltartrate monoglyceride salt(s) may be added to this powdered fat in such a manner as to adjust the pH value of the O/W emulsion fat to 2.0 to 12.0, preferably to 3.0 to 9.5.

The powdered fat of the present invention comprising the diacetyltartrate monoglyceride salt(s) may be obtained by, for example, preliminarily emulsifying 5 to 95 % by weight of an oleaginous phase obtained by dissolving the diacetyltartrate monoglyceride salt(s) optionally together with oil-soluble material(s) in fat(s)

4

and 95 to 5 % by weight of an aqueous phase obtained by dissolving required water-soluble material(s) in water to thereby give an O/W emulsion fat and then treating said emulsion fat in the same manner as the one described in the preparation of the powdered fat to be used in the present invention comprising diacetyltartrate monoglyceride.

The powdered fat of the present invention is widely available as a dough modifier for, e.g., baked products such as loaf bread, buns, French bread, hard rolls, pies, Danish pastries, biscuits, cookies and crackers and noodles such as pasta, noodles, Chinese noodles, udon, soba and instant Chinese noddles.

Now the premix in accordance with the present invention will be described in detail.

The premix may be prepared by adding the powdered fat as well as various auxiliary components selected from the group consisting of sugars, milk powder, egg powder, inflating agent, common salt, seasoning, perfume, emulsifier, yeast, yeast food, oxidizing agent, reducing agent and various enzyme preparations to the main ingredient, i.e., cereal powder such as wheat flour. Thus various food products, for example, baked foods such as hot cake, sponge cake, doughnut, pie, Danish pastry, bun, loaf bread, French bread, hard roll, biscuit, cooky and cracker; noodles such as pasta, noodles, Chinese noodles, udon and soba; and precooked food products such as tempura-soba may be readily prepared by simply adding, for example, water to the premix and then heating the resulting mixture by, for example, steaming, baking, frying or boiling.

In addition to the components as described above, the premix may further contain materials commonly used in the preparation of a premix.

The premix may be obtained by mixing said powdered fat of the present invention or for use in the present invention with, for example, wheat flour, sugars, milk powder, egg powder, inflating agent, common salt, seasoning and spices as well as, if required, yeast, oxidizing agent and reducing agent such as potassium bromate, L-ascorbic acid, sodium L-ascorbate, cysteine, glutathione or cystine, yeast food, sizing agent and various enzyme preparations such as $\alpha$-amylase, protease, lipoxydase, lactase, invertase, pentonase, malt, glucose oxidase and glucoamylase.

The amount of the powdered fat in the premix may be determined depending on the amount of the various components of said powdered fat. Usually the amount of the powdered fat may be appropriately selected within the range of 0.1 to 100 parts by weight per 100 parts by weight of the wheat flour, depending on the aimed product.

To further illustrate the present invention, the following Examples and Comparative Examples will be given.

The baking properties as shown in the following Example 1 and Comparative Examples 1 to 7 were determined by producing loaf bread by the following method and evaluating the baking properties thereof in the following manner.

Production of loaf bread:

Preparation method: 70 % sponge dough method.

| Sponge dough: | |
|---|---|
| strong flour | 70 parts by weight (350 g) |
| yeast | 2.5 parts by weight (12.5 g) |
| yeast food | 0.4 part by weight ( 2 g) |
| water | 42 parts by weight (210 g) |

| Main dough: | |
|---|---|
| highly viscoelastic wheat flour | 30 parts by weight (150 g) |
| highly refined sugar | 5 parts by weight ( 25 g) |
| common salt | 2 parts by weight ( 10 g) |
| water | 28 parts by weight (140 g) |

Modifier comprising the powdered fat to be used in the invention*:

Preparation procedures:

(1) Kneading of sponge dough (15-coat vertical mixer) low speed: 2 min., middle speed: 2 min., high speed: 1 min.
Dough temperature: 24 to 27°C.
Fermentation of sponge dough: 30°C, 3 h.
End temperature: 30 to 31°C.
(2) Main Kneading
low speed: 2 min., middle speed: 3 min., high speed: 1 min.
Adding modifier.
low speed: 2 min., middle speed: 2 min., high speed: 4 min.
Dough temperature: 26 to 30°C.
Floor time: 30°C, 30 min.
Dividing: 450 g x 2.
Bench: 15 min.
Final proofing: 40 - 55 min at 38°C, 70% of relative humidity.
Completion of fermentation: the crown reached the level 2.5 cm above the top of the mold.
Drop impact: the mold was dropped from the point 5 cm above eight times.
Baking: 220°C, 20 to 25 min.

Evaluation method:

The above preparation procedures were repeated four times at intervals of 30 to 40 min. Each baked product was cooled to a certain extent, sealed in a polyethylene bag and then allowed to stand at room temperature for three days. Then the volumes (ml) of the eight loaves of bread were determined and the mean was calculated.

In the following Examples 2 and 3 and Comparative Examples 8 to 12, the baking properties were evaluated by allowing each premix to stand at 25°C, preparing loaves of bread therefrom with the lapse of time, as shown below, and thus evaluating the baking properties thereof.

Preparation of bread:

Method for preparing bun: direct kneading.

| Composition: | premix | 700 g |
| | yeast | 17.5 g |
| | water | 290 g. |

Preparation procedures:

The above materials were mixed together in a 15-coat vertical mixer.
Rotation rate: at low speed for 3 min and middle speed for 6 min.
Dough temperature: 25°C.
Fermentation: 90 min (punching) and 30 min at 30°C and 80 % of relative humidity.
Dividing and rounding: ca. 50 g x 20.
Bench time: 25 min at room temperature (25°C).
Final proofing: 60 min at 38°C and 90% of relative humidity.
Baking: 8 min at 200°C.

*: 0.5 part by weight of the diacetyltartrate monoglyceride was added to 100 parts by weight of the highly viscoelastic wheat flour.

Evaluation:

The 20 baked buns were cooled to a certain extent, sealed each in a polyethylene bag and allowed to stand at 25°C for three days. Then the volume (ml) and weight (g) of each bun were determined to calculate the specific volume (volume/weight) thereof.

Comparative Examples 1 to 3

According to each composition as shown in the following Table 1, diacetyltartrate monoglyceride (acid value: 85.7) was added to the fat and heated to 50 to 60°C to thereby dissolve the same. Thus an oleaginous phase was obtained. Separately, anhydrous sodium carbonate or sodium hydroxide was added to water and heated to 50 to 60°C to thereby dissolve the same. Thus an aqueous phase was obtained.

The oleaginous phase was added to the aqueous phase and emulsified therein to give an O/W emulsion, which was then powdered by spray drying to thereby give the powdered fat of the present invention.

40 parts by weight of the powdered fat thus obtained, 20 parts by weight of dextrin, 20 parts by weight of sugar and 20 parts by weight of wheat flour were homogeneously mixed together to thereby give a powdered modifier.

25 kg of each powdered modifier thus obtained was packed in a bag and allowed to stand at room temperature for 68 days. Then the condition thereof was observed. As a result, 95 % of every modifier passed through a 200-mesh sieve and scarcely formed any lumps. Thus these modifiers were readily handable. The baking properties of each modifier were evaluated by preparing a loaf bread by using five parts by weight of the modifier stored for 68 days. Table 1 shows the results.

Comparative Examples 4 to 6

According to each composition as shown in Table 1, the procedures of Comparative Example 1 were repeated, but no powdered fat was obtained in every case because of poor emulsification.

Comparative Example 7

Ten parts by weight of the diacetyltartrate monoglyceride as used in Comparative Examples 1 to 3, 50 parts by weight of dextrin, 20 parts by weight of sugar and 20 parts by weight of wheat flour were homogeneously mixed together to thereby give a powdered modifier.

25 kg of the powdered modifier thus obtained was packed in a bag and allowed to stand for 68 days. Then the condition thereof was observed. As a result, 30 % of this modifier passed through a 200-mesh sieve with formation of a large number of lumps. Thus it was very difficult to handle. The baking properties of this modifier was evaluated by preparing a loaf bread by using five parts by weight of the modifier stored for 68 days instead of the modifier of this invention in the abovementioned manner. Table 1 shows the results.

Example 1

According to the composition as shown in Table 1, sodium salt of diacetyltartrate monoglyceride was added to the fat and heated to 50 to 60°C to thereby dissolve the same. Thus an oleaginous phase was obtained. Then the resulting phase was added to an aqueous phase adjusted to a temperature of 50 to 60°C in such a manner as to give an O/W emulsion. This emulsion was powdered by spray drying. Thus the powdered fat of the present invention was obtained.

40 parts by weight of the powdered fat thus obtained, 20 parts by weight of dextrin, 20 parts by weight of sugar and 20 parts by weight of wheat flour were homogeneously mixed together to thereby give a powdered modifier.

25 kg of this modifier was packed in a bag and allowed to stand at room temperature for 68 days. Then the condition thereof was observed. As a result, 95 % of the same passed through a 200-mesh seive while scarcely forming any lumps. Thus the modifier was readily handable. The baking properties thereof were evaluated by preparing a loaf bread in the same manner as the one described above by using five parts by weight of the modifier stored for 68 days. Table 1 shows the results.

7

Table 1

| | | Comparative Example | | | Example | Comparative Example | | | |
|---|---|---|---|---|---|---|---|---|---|
| | | 1 | 2 | 3 | 1 | 4 | 5 | 6 | 7 |
| Powdered fat | water (pt. by wt.) | 60 | 60 | 60 | 60 | 60 | 60 | 60 | – |
| | sodium carbonate (do.) | 0.2 | 0.7 | 8 | – | – | 0.1 | – | – |
| | sodium hydroxide (do.) | – | – | – | – | – | – | 2 | – |
| | palm oil (do.) | 29.8 | 29.3 | 22.0 | 30 | 30 | 29.9 | 28 | – |
| | diacetyltartrate monoglyceride (do.) | 10 | 10 | 10 | – | 10 | 10 | 10 | – |
| | sodium salt of diacetylatartrate monoglyceride (do.) | – | – | – | 10 | – | – | – | – |
| | pH value of O/W emulsion | 2.20 | 4.96 | 9.59 | 7.06 | 1.54 | 1.56 | 12.5 | (No powdered fat obtained.) |
| Modifier | powdered fat (pt. by wt.) | 40 | 40 | 40 | 40 | | | | |
| | dextrin (do.) | 20 | 20 | 20 | 20 | | | | 50 |
| | sugar (do.) | 20 | 20 | 20 | 20 | | | | 20 |
| | wheat flour (do.) | 20 | 20 | 20 | 20 | | | | 20 |
| | diacetyltartrate monoglyceride (do.) | | | | | | | | 10 |
| | grain size after storing at room temp. (passing 200-mesh sieve) | 95 | 95 | 95 | 95 | | | | 30 |
| | baking property test (volume of loaf bread; ml) | 2020 | 2138 | 2122 | 2200 | | | | 1960 |

Example Comparative Examples 8 to 10

According to each composition as shown in the following Table 2, diacetyltartrate monoglyceride (acid value: 84) was mixed with palm oil and heated to 60°C thereby give an oleaginous phase. Separately sodium carbonate or sodium hydroxide, sodium caseinate and dextrin (D.E. value: 10) were added to water

EP 0 294 692 B1

and heated to 60°C to thereby give an aqueous phase. The above oleaginous phase was added by portions to the aqueous phase while maintaining the aqueous phase at 60°C under stirring to thereby form an O/W emulsion. Then the emulsion was homogenized with a homomixer (mfd. by Tokushu Kika Kogyo K.K.) and spray-dried to thereby give a powdered fat.

Ten parts by weight of the powdered fat thus obtained containing 0.5 parts by weight of diacetyltartrate monoglyceride, 100 parts by weight of highly viscoelastic wheat powder, 25 parts by weight of highly refined sugar, two parts by weight of skim milk, 1.9 parts by weight of dry egg powder, one part by weight of common salt and 0.1 part by weight of yeast food were homogeneously mixed together to thereby give the premix.

Then the baking properties of the premix thus obtained were evaluated in the same manner as the one described above. Table 3 shows the results.

Example 2

According to the composition as shown in the following Table 2, sodium salt of diacetyltartrate monoglyceride and palm-oil were mixed together and heated to 60°C to thereby give an oleaginous phase. Separately sodium caseinate and dextrin (DE value: 10) were added to water and heated to 60°C to thereby give an aqueous phase. Then the procedures of Comparative Examples 8 to 10 were repeated to thereby give a premix of the present invention.

The baking properties of the premix thus obtained were evaluated in the same manner as the one described above.
Table 3 shows the results.

Comparative Examples 11 and 12

According to each composition as shown in the following Table 2, the procedures of Comparative Examples 8 to 10 were repeated. However the poor O/W emulsification made in impossible to obtain any powdered fat.

Comparative Example 13

According to the composition as shown in the following Table 2, sodium caseinate and dextrin (DE value: 10) were added to water and heated to 60°C to thereby give an aqueous phase. Then palm oil, which had been preliminarily heated to 60°C, was added by portions to the aqueous phase obtained above, while maintaining the aqueous phase at 60°C under stirring to thereby form an O/W emulsion. Then this emulsion was homogenized with a homomixer and spray-dried to thereby give a powdered fat.

9.5 parts by weight of the powdered fat thus obtained, 100 parts by weight of highly viscoelastic wheat flour, 25 parts by weight of highly refined sugar, two parts by weight of skim milk, 1.9 part by weight of dry whole egg powder, one part by weight of common salt, 0.1 part by weight of yeast food and 0.5 part by weight of powdery diacetyltartrate monoglyceride were homogeneously mixed together to thereby give a premix.

The baking properties of the premix were evaluated in the same manner as the one described above.

9

Table 3 showed the results.

Table 2

| | | Comparative Example 8 | Comparative Example 9 | Comparative Example 10 | Example 2 | Comparative Example 11 | Comparative Example 12 | Comparative Example 13 |
|---|---|---|---|---|---|---|---|---|
| Powdered fat | water (pt. by wt.) | 49.7 | 49.5 | 46 | 50 | 50 | 47 | 52.2 |
| | sodium carbonate (do.) | 0.3 | 0.3 | 4 | - | - | - | 0.3 |
| | sodium hydroxide (do.) | - | 0.2 | - | - | - | 3 | - |
| | sodium caseinate (do.) | 5 | 5 | 5 | 5 | 5 | 5 | 5 |
| | dextrin (do.) | 12.5 | 12.5 | 12.5 | 12.5 | 12.5 | 12.5 | 12.5 |
| | diacetyltartrate monoglyceride (do.) | 2.5 | 2.5 | 2.5 | - | 2.5 | 2.5 | - |
| | sodium salt of diacetyltartrate monoglyceride (do.) | - | - | - | 2.5 | - | - | - |
| | palm oil (do.) | 30 | 30 | 30 | 30 | 30 | 30 | 30 |
| | pH value of O/W emulsion | 3.5 | 5.4 | 9.6 | 6.4 | 1.5 poor O/W emulsification | 13.0 | 8.5 |
| Premix | powdered fat (pt. by wt.) | 10 | 10 | 10 | 10 | - | - | 9.5 |
| | highly viscoelastic wheat flour (do.) | 100 | 100 | 100 | 100 | - | - | 100 |
| | highly refined sugar (do.) | 25 | 25 | 25 | 25 | - | - | 25 |
| | skim milk (do.) | 2 | 2 | 2 | 2 | - | - | 2 |
| | dry whole egg powder (do.) | 1.9 | 1.9 | 1.9 | 1.9 | - | - | 1.9 |
| | common salt (do.) | 1 | 1 | 1 | 1 | - | - | 1 |
| | yeast food (do.) | 0.1 | 0.1 | 0.1 | 0.1 | - | - | 0.1 |
| | diacetyltartrate monoglyceride (do.) | - | - | - | - | - | - | 0.5 |

Table 3

| *unit (ml/g) | Comp. Example 8 | Comp. Example 9 | Comp. Example 10 | Example 2 | Comp. Ex. 13 |
|---|---|---|---|---|---|
| specific volume immediately after preparing premix | 7.8 | 8.0 | 8.0 | 7.5 | 7.4 |
| specific volume after storing at 25°C for 1 month | 7.9 | 7.8 | 7.7 | 7.5 | 6.2 |
| specific volume after storing at 25°C for 3 months | 7.6 | 7.9 | 7.8 | 7.5 | 5.8 |
| specific volume after storing at 25°C for 6 months | 7.8 | 7.8 | 7.7 | 7.4 | 5.6 |
| specific volume after storing at 25°C for 1 year | 7.7 | 7.9 | 7.8 | 7.5 | 5.1 |

Accordingly the powdered fat of the present invention exerts the following effects.

(1) A modifier comprising the powdered fat of the present invention shows no blocking upon prolonged storage, compared with conventional ones comprising diacetyltartrate monoglyceride. Thus it can be readily handled and scarcely causes any scattering in the qualities of bread.

(2) The powdered fat of the present invention is not accompanied by the acidic taste, which is a disadvantage of diacetyltartrate monoglyceride, since the free acetic acid formed during the preparation of diacetyltartrate monoglyceride is neutralized at the powdering step.

Further the hydrolysis of diacetyltartrate monoglyceride with the lapse of time observed in conventional premixes comprising diacetyltartrate monoglyceride is never observed in the premix of the present invention. Thus the premix of the present invention shows no deterioration in the performance of confectionery, baking and noodle making upon storage.

**Claims**

1.  Use of a powdered fat prepared by powdering an oil-in-water type emulsion fat, (O/W emulsion fat), comprising fat(s), water, diacetyltartrate monoglyceride and base(s) only or base(s) and salt(s) and having a pH value of 2.0 to 12.0 for confectionary, baking and noodle-making with the proviso that the salt(s) is (are) not formed from a strong acid or a strong base.

2.  The use according to claim 1, wherein the pH value of said O/W emulsion fat ranges from 3.0 to 9.5.

3.  The use according to claim 1, wherein said base(s) is (are) one or more members selected from among ammonia, calcium hydroxide, calcium oxide, magnesium hydroxide, magnesium oxide, potassium hydroxide and sodium hydroxide.

4.  The use according to claim 1, wherein said salt(s) is (are) one or more members selected from among sodium acetate, ammonium carbonate, calcium carbonate, magnesium carbonate, sodium carbonate, sodium hydrogen carbonate, ammonium hydrogen carbonate, dipotassium phosphate, disodium phosphate, trisodium phosphate, potassium pyrophosphate, sodium pyrophosphate, sodium citrate, sodium tartrate, disodium succinate, sodium glutamate and sodium ascorbate.

5.  A powdered fat obtainable by powdering an O/W emulsion fat comprising fat(s), water and salt(s) of diacetyltartrate monoglyceride and having a pH value of 2.0 to 12.0.

6.  The powdered fat according to claim 5, wherein the pH value of said O/W emulsion fat ranges from 3.0 to 9.5.

7.  The powdered fat according to claim 5, wherein said salt(s) of diacetyltartrate monoglyceride is (are) one or more members selected from among alkali metal salts and alkaline earth metal salts such as sodium salt, potassium salt, calcium salt and magnesium salt.

8.  Use of a premix comprising a powdered fat which is prepared by powdering an O/W emulsion fat comprising fat(s), water, diacetyltartrate monoglyceride and base(s) only or base(s) and salt(s) and having a pH value of 2.0 to 12.0 for confectionary, baking and noodle-making with the proviso that the

11

salt(s) is (are) not formed from a strong acid or a strong base.

9. A premix comprising a powdered fat obtainable by powdering an O/W emulsion fat comprising fat(s), water and salt(s) of diacetyltartrate monoglyceride and having a pH value of 2.0 to 12.0.

**Patentansprüche**

1. Verwendung eines pulverförmigen Fettes, hergestellt durch Pulverisieren eines Emulsionsfettes vom Öl-in-Wasser-Typ (O/W-Emulsionsfett), umfassend Fett(e), Wasser, Diacetyltartratmonoglycerid und Base-(n) allein oder Base(n) und Salz(e), mit einem pH-Wert von 2,0 bis 12,0 für Süßwaren, zum Backen und bei der Nudelherstellung, mit der Maßgabe, daß das (die) Salz(e) nicht aus einem starken Salz oder einer starken Base gebildet ist (sind).

2. Verwendung nach Anspruch 1, wobei der pH-Wert des O/W-Emulsionsfettes von 3,0 bis 9,5 reicht.

3. Verwendung nach Anspruch 1, wobei die Base(n) ein oder mehrere Mitglieder, ausgewählt aus Ammoniak, Calciumhydroxid, Calciumoxid, Magnesiumhydroxid, Magnesiumoxid, Kaliumhydroxid und Natriumhydroxid, ist (sind).

4. Verwendung nach Anspruch 1, wobei das (die) Salz(e) eines oder mehrere Mitglieder, ausgewählt aus Natriumacetat, Ammoniumcarbonat, Calciumcarbonat, Magnesiumcarbonat, Natriumcarbonat, Natriumhydrogencarbonat, Ammoniumhydrogencarbonat, Dikaliumphosphat, Dinatriumphosphat, Trinatriumphosphat, Kaliumpyrophosphat, Natriumpyrophosphat, Natriumcitrat, Natriumtartrat, Dinatriumsuccinat, Natriumglutamat und Natriumascorbat, ist (sind).

5. Pulverisiertes Fett, erhältlich durch Pulverisieren eines O/W-Emulsionsfettes, umfassend Fett(e), Wasser und Salz(e) von Diacetyltartratmonoglycerid, mit einem pH-Wert von 2,0 bis 12,0.

6. Pulverisiertes Fett nach Anspruch 5, wobei der pH-Wert des O/W-Emulsionsfettes von 3,0 bis 9,5 reicht.

7. Pulverisiertes Fett nach Anspruch 5, wobei das (die) Salz(e) von Diacetyltartratmonoglycerid eines oder mehrere Mitglieder, ausgewählt aus Alkalimetallsalzen und Erdalkalimetallsalzen, wie Natriumsalz, Kaliumsalz, Calciumsalz und Magnesiumsalz, ist (sind).

8. Verwendung einer Fertigmischung, umfassend ein pulverisiertes Fett, welches hergestellt ist durch Pulverisieren eines O/W-Emulsionsfettes, umfassend Fett(e), Wasser, Diacetyltartratmonoglycerid und Base(n) allein oder Base(n) und Salz(e), mit einem pH-Wert von 2,0 bis 12,0, für Süßwaren, zum Backen und bei der Nudelherstellung, mit der Maßgabe, daß das (die) Salz(e) nicht aus einer starken Säure oder starken Base gebildet ist (sind).

9. Fertigmischung, umfassend ein pulverisiertes Fett, erhältlich durch Pulverisieren eines O/W-Emulsionsfettes, umfassend Fett(e), Wasser und Salz(e) von Diacetyltartratmonoglycerid, mit einem pH-Wert von 2,0 bis 12,0.

**Revendications**

1. Utilisation d'une graisse pulvérulente préparée par la pulvérisation d'une matière grasse émulsifiée de type huile dans l'eau (matière grasse émulsifiée huile/eau) comprenant une ou plusieurs graisses, de l'eau, du monoglycéride de diacétyltartrate et une ou plusieurs bases seules ou bien une ou plusieurs bases et un ou plusieurs sels, ayant un pH compris entre 2,0 et 12,0 et prévue pour la confiserie, la boulangerie et la fabrication de pâtes alimentaires, à condition que le ou les sels ne soient pas formés à partir d'un acide fort ou d'une base forte.

2. Utilisation selon la revendication 1, caractérisée en ce que le pH de ladite matière grasse émulsifiée huile/eau est compris entre 3,0 et 9,5.

**3.** Utilisation selon la revendication 1, caractérisée en ce que ladite ou lesdites bases sont un ou plusieurs ingrédients choisis parmi l'ammoniaque, l'hydroxyde de calcium, l'oxyde de calcium, l'hydroxyde de magnésium, l'oxyde de magnésium, l'hydroxyde de potassium et l'hydroxyde de sodium.

**4.** Utilisation selon la revendication 1, caractérisée en ce que ledit ou lesdits sels sont un ou plusieurs ingrédients choisis parmi l'acétate de sodium, le carbonate d'ammonium, le carbonate de calcium, le carbonate de magnésium, le carbonate de sodium, le bicarbonate de sodium, le bicarbonate d'ammonium, le phosphate dipotassique, le phosphate disodique, le phosphate trisodique, le pyrophosphate de potassium, le pyrophosphate de sodium, le citrate de sodium, le tartrate de sodium, le succinate disodique, le glutamate de sodium et l'ascorbate de sodium.

**5.** Graisse pulvérulente réalisable par la pulvérisation d'une matière grasse émulsifiée huile/eau comprenant une ou plusieurs graisses, de l'eau et un ou plusieurs sels du monoglycéride de diacétyltartrate et ayant un pH compris entre 2,0 et 12,0.

**6.** Graisse pulvérulente selon la revendication 5, caractérisée en ce que le pH de ladite matière grasse émulsifiée huile/eau est compris entre 3,0 et 9,5.

**7.** Graisse pulvérulente selon la revendication 5, caractérisée en ce que ledit ou lesdits sels du monoglycéride de diacétyltartrate sont un ou plusieurs ingrédients choisis parmi les sels de métaux alcalins et les sels de métaux alcalino-terreux comme le sel de sodium, le sel de potassium, le sel de calcium et le sel de magnésium.

**8.** Utilisation d'un prémélange comprenant une graisse pulvérulente qui est préparée par la pulvérisation d'une matière grasse émulsifiée huile/eau comprenant une ou plusieurs graisses, de l'eau, du monoglycéride de diacétyltartrate et une ou plusieurs bases seules ou bien une ou plusieurs bases et un ou plusieurs sels, ayant un pH compris entre 2,0 et 12,0 et prévue pour la confiserie, la boulangerie et la fabrication de pâtes alimentaires, à condition que le ou les sels ne soient pas formés à partir d'un acide fort ou d'une base forte.

**9.** Prémélange contenant une graisse pulvérulente réalisable par la pulvérisation d'une matière grasse émulsifiée huile/eau contenant une ou plusieurs graisses, de l'eau et un ou plusieurs sels du monoglycéride de diacétyltartrate et ayant un pH compris entre 2,0 et 12,0.